# EUROPEAN PATENT SPECIFICATION

(11) **EP 2 901 779 B1**
(45) Date of publication and mention of the grant of the patent: **30.11.2016**
(21) Application number: 13794991.3
(22) Date of filing: 17.09.2013
(51) Int. Cl.: H04W 60/06

(54) **METHODS, APPARATUS AND COMPUTER PROGRAMS FOR OPERATING A WIRELESS COMMUNICATIONS DEVICE**
VERFAHREN, VORRICHTUNG UND COMPUTERPROGRAMME ZUM BETREIBEN EINER DRAHTLOSEN KOMMUNIKATIONSVORRICHTUNG
PROCÉDÉS, APPAREIL ET PROGRAMMES D'ORDINATEUR DESTINÉS AU FONCTIONNEMENT D'UN DISPOSITIF DE COMMUNICATIONS SANS FIL

(30) Priority: 28.09.2012 GB 201217424
(43) Date of publication of application: 05.08.2015
(73) Proprietor: Broadcom Corporation, Irvine, CA 92617 (US)
(72) Inventor: FRANTTI, Kalle Tapio, FI-90580 Oulu (FI)
(74) Representative: Bosch Jehle Patentanwaltsgesellschaft mbH
(86) International application number: PCT/IB2013/058602
(87) International publication number: WO 2014/049490

(56) References cited:
- WO-A2-2004/098108
- US-A1- 2006 062 183
- US-A1- 2008 106 399
- US-A1- 2011 075 556
- US-A1- 2012 224 484

## Description

### Technical Field

The present invention relates to methods, apparatus and computer programs for operating a wireless communications device. The exemplary and non-limiting embodiments of this invention relate generally to wireless communication systems, methods, devices and computer programs, and more specifically relate to offloading traffic from networks, such as IEEE 802.11 wireless local area networks (WLANs) when they utilise contention based access.

### Background

Networks that operate using unlicensed spectrum such as WLANs are typically characterised in having a capacity, e.g. throughput and delay, which depends tightly on the number of users, the packet sizes being transmitted, and the type of application. This arises from the nature of the contention-based media access control (MAC) these networks use to apportion the limited radio resources fairly among the contending users. In the various WLAN systems (IEEE 802.11a, b, g, n, etc.), this contention-based channel access uses a technique termed carrier sense multiple access with collision avoidance (CSMA/CA). Other access protocols for WLANs include the point coordination function (PCF) and the hybrid coordination function (HCF). Contention-based channel access is also used in cellular/licensed band systems such as on the random access channel (RACH), but in that particular case the channel is used to establish access with a cell and not for user traffic such as real-time user data. Zigbee is another radio access technology which utilises a contention-based media access control. In all cases the capacity depends on the number of users and volume of information being exchanged (though on the RACH the volume is strictly limited).

A problem arises when a station (STA) or other such user terminal is utilising a WLAN for real time traffic, such as voice over Internet protocol (VoIP), video calls, and interactive games, etc. This is because real time traffic has maximum delay time and minimum throughput limitations for high quality communications like 100 ms delay for VoIP (64 kbit/s throughput) and video calls (384 kbit/s throughput), and 40 ms for interactive games. The delay time of transmitted packets and the throughput depends, for example, on the number of users, the size of packets, and the amount of traffic in the same access point's (AP's) coverage area, and also on any congestion that intermediate nodes and links might experience. Too much delay or too little throughput deteriorates the quality of real-time connections or sessions, to the point where they may be dropped. The teachings below address this and other problems.

US-A1-2011/075556 relates to systems and methods for dynamic load balancing in a wireless network. More specifically, US-A1-2011/075556 discusses periodically providing dynamic load balancing of mobile devices associated with a plurality of wireless access devices.

### Summary

According to a first aspect of the present invention, there is provided a method for operating a wireless communications device, the method comprising: determining channel quality on a second data link between the wireless communications device and a network access point; characterised by: for a case in which the wireless communications device receives a message from a first node to the network access point indicating the first node is terminating a first data link with the network access point, conditioning termination by the wireless communications device of the second data link on a re-assessment of the channel quality after the first data link is terminated.

According to a second aspect of the present invention, there is provided apparatus for controlling a wireless communications device, the apparatus comprising a processing system configured to control the wireless communications device at least to: determine channel quality on a second data link between the wireless communications device and a network access point; and for a case in which the wireless communications device receives a message from a first node to the network access point indicating the first node is terminating a first data link with the network access point, conditioning termination by the wireless communications device of the second data link on a re-assessment of the channel quality after the first data link is terminated.

According to a third aspect of the present invention, there is provided a computer program comprising a set of instructions for operating a wireless communications device, the set of instructions comprising: code for determining channel quality on a second data link between the wireless communications device and a network access point; characterised by: code for conditioning termination by the wireless communications device of the second data link on a re-assessment of the channel quality after the first data link is terminated for a case in which the wireless communications device receives a message from a first node to the network access point indicating the first node is terminating a first data link with the network access point.

The processing systems described above may comprise at least one processor and at least one memory unit including computer program code.

There may be provided a computer-readable memory tangibly storing a set of instructions as described above.

Further features and advantages of the invention will become apparent from the following description of preferred embodiments of the invention, given by way of example only, which is made with reference to the accompanying drawings.

### Brief Description of the Drawings

Figure 1 shows a schematic diagram illustrating two adjacent APs each with several STAs associated to them, and is an example environment in which some embodiments of these teachings may be practised to advantage;
Figure 2 shows a signalling diagram illustrating a first node initiating a disassociation from the AP according to an exemplary embodiment of these teachings;
Figure 3 shows a signalling diagram illustrating a first node initiating a disconnection from the AP according to an exemplary embodiment of these teachings;
Figure 4A shows a logic flow diagram that illustrates from the perspective of a second node described in the examples the operation of a method, and a result of execution of computer program instructions embodied on a computer readable memory or memory unit, in accordance with an exemplary embodiment of these teachings;
Figure 4B shows a logic flow diagram that illustrates from the perspective of either the first or the second node described in the examples as sending its disassociation message, the operation of a method, and a result of execution of computer program instructions embodied on a computer readable memory or memory unit, in accordance with another exemplary embodiment of these teachings; and
Figure 5 shows a simplified block diagram of a first and a second node/station in communication with a network access point to which they are associated and having ongoing real-time data exchanges, and are exemplary electronic devices suitable for use in practising some example embodiments of these teachings.

### Detailed Description

While the examples below are in the context of an 802.11 type of WLAN, this is a non-limiting example only. The specific examples used in these teachings may be easily adapted for other types of radio networks, such as WLANs that do not follow an 802.11 protocol or even personal area networks such as Zigbee for example. In that regard, the AP in the below examples is exemplary for a generic wireless network access point and the STAs are exemplary mobile terminals or user equipment (UEs) or other such user nodes. Such STAs may also be implemented as automated sensor devices that engage in machine-to-machine (M2M) type communications without direct human input, for example to record and upload real-time video from such a sensor.

Current implementations of WLANs do not include any mechanism to transfer (off-load) real-time traffic to another type of network in a controlled manner. Therefore if the delay time of some real-time application increases to an unacceptable level, the application is dropped off. In conventional WLANs, the STAs are not informed whether any of their neighbour STAs have dropped off or been disconnected, but they each simply use the CMSA/CA protocol to contend for the channel with whichever other STAs might desire channel access.

Additionally, the delay times of different STAs in WLANs increase and throughputs decrease simultaneously and so two or more STAs can approach delay time and throughput thresholds together as the number of users and the amount of data traffic in the coverage area increases. This may lead to unwanted parallel traffic drop-off or unwanted traffic off-loading, either of which can free more capacity than is required for traffic to/from the remaining STAs to meet their delay and throughput thresholds. In the drop-off situation, a WLAN node only disconnects without disassociating from its AP whereas in the off-loading case, a WLAN STA disconnects from its AP with or without disassociating from it.

These teachings enable such STAs in the WLANs to do their traffic drop-off or off-loading to another type of network sequentially and one by one in order to more efficiently utilise the WLANs. Below are detailed example embodiments in which real-time traffic off-loading from WLANs and connection or session drop off on WLANs is handled as a function of delay time.

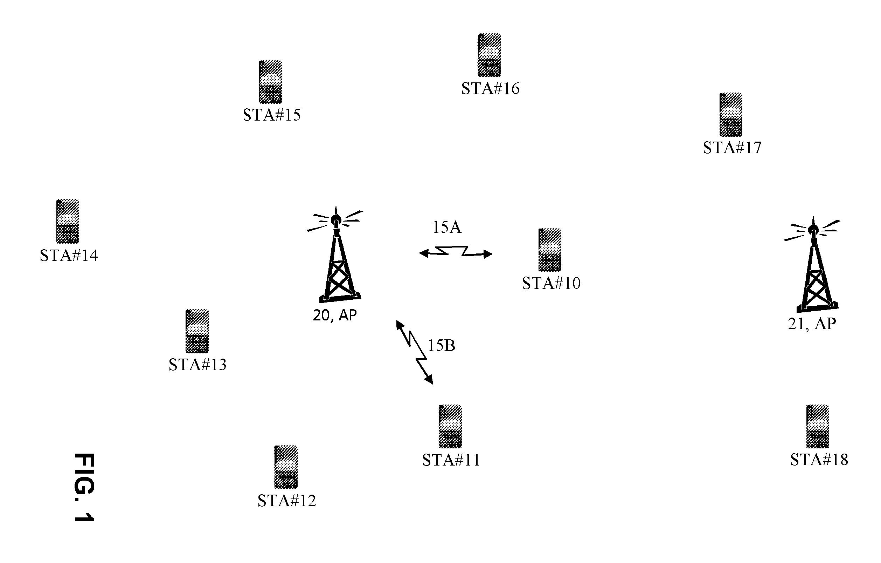

Figure 1 illustrates schematically an example radio environment to provide a visual context for the examples below. The network which will become congested is controlled by AP 20 to which are attached STA #s 10 through 16. There is an adjacent network controlled by AP 21 to which are attached STA #s 17 and 18. Assume the following for this example: STA#10 is the one that is seeing a reduction in quality (e.g. delay and/or drop in data throughput) in its real-time communications on a first data link 15A; STA#10 is also able to access AP 21; and STA#11 is also engaging in real-time communications with AP 20 on a second data link 15B and also begins to experience reduced quality of those real-time communications. STA#10 is referred to herein more generically as a first node and STA#11 as a second node.

While Figure 1 illustrates the adjacent network also as a WLAN, in other embodiments it may be a different type of network from that of AP 20 to which STA#10 is attached and experiencing delays. For example, AP 21 may represent for other embodiments an access node of a cellular network, a home eNB to which STA#10 is an authorised member, or some other access point of some other type of network. In this example AP 20 is operating using a radio access technology that utilises licence-exempt radio spectrum, such as WLAN for example. Licence-exempt radio spectrum is sometimes alternatively referred to as a shared band or an unlicensed band, and generally refers to radio spectrum which the relevant governmental regulator has deemed to be open for the public's use rather than licensed to any specific network operator. The governmental regulator may establish preconditions for using this open spectrum, for example concerning non-interference, maximum transmit power/range and fairness, but otherwise the spectrum is available for use without a licence. In the US, the industrial, scientific, medical (ISM) band and also television whitespaces (TV WS) are examples of licence-exempt radio spectrum.

As noted above, if STA#10 were to drop-off its data link with AP 20, it would still retain its association with AP 20, whereas if STA#10 were to off-load from AP 20 it would additionally disassociate from AP 20 which would allow it to associate with the adjacent network AP 21. In a conventional WLAN, STA#11 would have no knowledge that STA#10 dropped off or off-loaded and may at the same time itself drop off or off-load from AP 20, which in some cases would leave excess unused capacity on AP 20.

To address this issue, according to exemplary embodiments of these teachings the off-loading or disconnecting node (the first node/STA#10 in this example) informs its neighbours that it wants to terminate a connection or session. In one implementation this can be realised for example by using disassociation frames, which are conventional network management frames in IEEE 802.11-based WLANs. When STA#10 wants to disassociate, it can transmit a disassociation frame to its AP 20 informing that it wants to terminate its connection or session and disassociate from that same AP 20. Nodes nearby such as STA#11 could then defer their own disassociation decision (and their own disassociation frame transmission) in order to see the effects of the first node's (STA#10) disassociation on the delay times and throughput seen by the second node (STA#11). If delay time for STA#11 does not drop and throughput does not increase sufficiently, the second node STA#11 listens for a short time to learn if there might be still another node transmitting a disassociation frame. If not, then the second node (STA#11) proceeds to transmit its own disassociation frame. If instead the delay time dropped and throughput increased sufficiently for the second node (STA#11), that second node can continue its own real-time connection or session with the original AP 20 which is now less congested.

If the first node (STA#10) wants to disconnect from AP 20 but preserve its association with it, the first node STA#10 would not use the exact same disassociation frame for this purpose but instead this aspect of the invention can be implemented for example by the first node (STA#10) transmitting a disassociation frame without the source node address (its own address), and also use, for example, one of the network's broadcast addresses or multicast addresses as a destination address. With a the broadcast address (or a multicast address) as the destination, all the nodes associated to the AP 20 will open the packet rather than discard it as not being addressed to them individually, and in this case would learn that the first node 10 is disassociating from the AP 20 or disconnecting its data link 15A without disassociating. Either result is seen as the same to the neighbour nodes since in both cases the first data link 15A between the first node 10 and the AP 20 would be terminated, which in most cases should reduce congestion with this AP 20. Nodes nearby such as the second node (STA#11) could then defer their off-loading or disconnection decision in order to see the effects of disassociation/disconnection by the first node (STA#10) to the delay times and throughputs of the second node (STA#11).

This avoids the conventional practice of nodes and real-time communication applications dropping off in an uncontrolled manner when delay times or throughput becomes unacceptable.

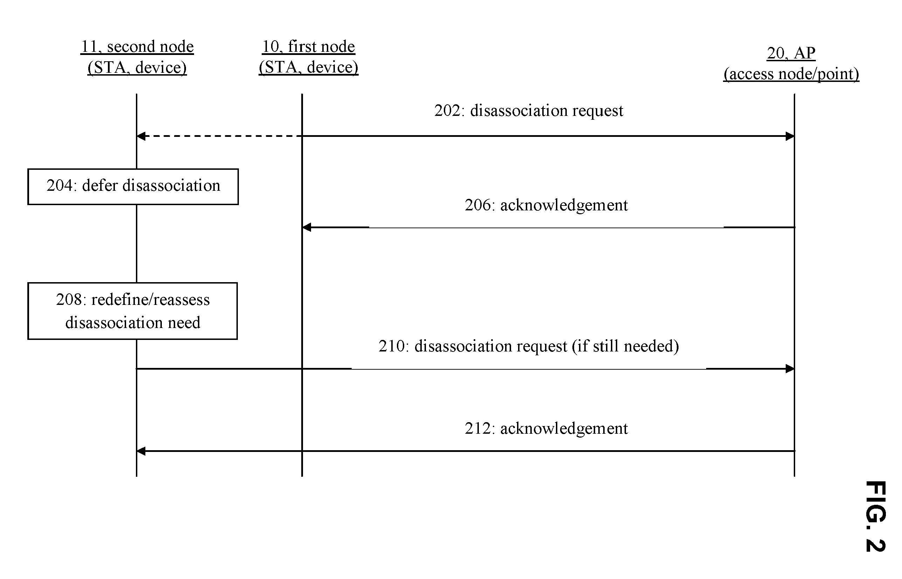

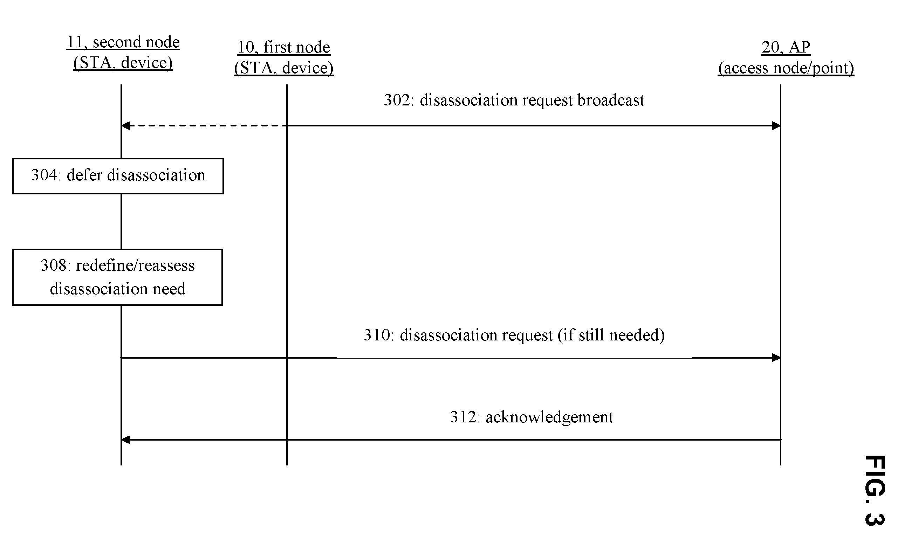

Figures 2 and 3 are signalling diagrams which respectively illustrate examples of the above disassociation and disconnection from an AP 20 as initiated by the first node 10. The overview above assumed that the first node 10 initiates the disassociation or the disconnection due to a drop in its channel quality (reduced throughput and/or increased delay). This is likely to be the most frequent scenario where embodiments of these teachings may be used to advantage since in that case both the first and second nodes 10, 11 will be experiencing quality issues with their respective real-time communications with the AP 20. But the first node 10 may send its disassociation request whenever it terminates its real-time communication application or disconnects from its AP, regardless of the cause. For example, the first node 10 may simply have completed its real-time data exchange, or it may be moving and choose to associate with the adjacent network once it sees signal strength with the original network AP 20 begin to fade. If this happens to occur at a time when the second node 11 is beginning to experience delay increase or throughput decrease for its own real-time communications, then the second node can put these teachings to use even though the first node disassociated or disconnected for other reasons apart from diminished channel quality.

Figure 2 illustrates the first node 10 initiating a disassociation from the AP 20 and begins with the first node 10 sending a disassociation request 202 to the AP 20. This disassociation request lists the first node 10 as the source address and also lists the destination address. The second node 11 is experiencing at the same time some reduction in throughput and/or increase in delay for its real-time communications to the point where it is ready to also disassociate from the AP 20. The second node 11 hears this disassociation request 202 from the first node 10, and in response at block 204 the second node 11 defers its own disassociation from the AP 20 in anticipation of improved conditions once the first node 10 is no longer adding to congestion with the AP 20. The AP 20 hears the disassociation request 202 and replies with an acknowledgement 206. At this point the first node 10 has disassociated from the AP 20; its data link is dropped and the first node 10 is no longer associated with the AP 20. In some embodiments the first node 10 would then associate with a neighbour network (AP 21) and thereby off-load its traffic from AP 20 to AP 21. In other examples the neighbour network is of a different type from that which the first node 10 disassociated, so for example instead of off-loading to neighbour AP 21 the first node 10 may off-load to a cellular network.

Now at block 208 the second node 11 redefines or reassesses its need to disassociate by listening to the WLAN channel to see if congestion is relieved by the departure of the first node 10. Here the second node 11 can also listen for further disassociation messages from any other node engaging in real-time communications via the same AP 20. If after redefining and reassessing its need to disassociate the second node 11 decides that disassociation is no longer needed, then the second node 11 simply continues with its real-time communications via the AP 20 on the channel which now has improved quality. If instead the result of the redefining/reassessing at block 208 is that the channel quality is not sufficiently improved and the second node 11 still has a need to disassociate from the AP 20, then its sends to the AP 20 a disassociation request 210. After the AP 20 acknowledges 212, the second node 11 is disassociated from the AP 20, after which it may then associate with some neighbour network and thus off-load its traffic from AP 20.

Nodes in an IEEE 802.11-based WLAN system have the ability to listen and monitor the air interface to see if the channel is available or if the received frame is aimed for it. Specifically, in an example, the node's network interface card (NIC) continually scans all 802.11 radio channels. Every frame has a control field that depicts the used protocol version, frame type, and various other indicators. All frames additionally contain MAC addresses of the source and destination nodes as well as of the access point, a frame sequence number, frame body, and frame check sequence. If nodes are transmitting and the channel is not available, they defer their transmission until the channel is free. If they notice transmitted packets on the media, they check the packet address to see if a particular packet is directed to them. If yes they receive it, and otherwise they discard it according to conventional WLAN procedures. By checking received messages such as the disassociation frames that are not addressed to themselves, neighbour nodes such as the second node 11 can see the disassociation request 202 that the first node 10 transmits to the AP 20 and thereby know the channel should soon become less congested.

The second node 11 (and any other nodes having a data link with the AP 20 and considering disassociating from it for quality purposes) will check the packet types and defer transmission of their own disassociation frame, if needed, by utilising and modifying existing channel monitoring and transmission deferring mechanisms at block 208. If the first node 10 wants to disassociate, it can in a standardised way transmit a disassociation frame 202 to its AP 20 informing that it wants to terminate its connection or session and disassociate from the AP 20. Other nodes nearby listening to the channel such as the second node 11 could then defer at block 204, according to the standard CSMA/CA MAC, transmission of their own disassociation frame 210 in order to see the effects of the first node's disassociation to the delay times and throughput of their own data.

In other words, the second node 11 reconsiders at block 208 its disassociation frame transmission if there is an ongoing disassociation request 202. If the second node's delay time does not drop and its throughput does not increase enough, the second node 11 listens for a while at block 208 to see if another node is transmitting a further disassociation frame. If not, the second node proceeds to transmit its own disassociation frame 210. If instead the delay time dropped and throughput increased enough for the second node 11, the second node 11 simply continues its real-time connection or session.

Figure 3 is a signalling diagram illustrating by non-limiting example the case in which the first node 10 wants to disconnect but preserve its association. In this example the first node 10 cannot use a disassociation frame that is identical to what it would have used in the Figure 2 case where it was also terminating its association with the AP 20. In the Figure 3 example, the first node informs its neighbour nodes of its disconnection from the AP 20 by transmitting the disassociation frame 302 without the source node address and use the broadcast address as a destination address. The nodes nearby such as the second node 11 could then defer at block 304 their own offloading or disconnection process in order to see the effects of the first node's disconnection on the delay times and throughputs seen by those neighbour nodes, which in Figure 3 is the second node 11. Then similar to that described above for Figure 2, at Figure 3 the second node can redefine/reassess its need to disassociate (or disconnect) from the AP 20. If the channel quality has improved sufficiently due to the first node 10 no longer utilising radio resources with the AP 20, the second node 11 may stay on the channel with the AP 20. If the channel quality has not improved sufficiently, then the second node 11 can proceed to send to the AP 20 its own disassociation request 310. Since this is a disassociation request with the proper source address and destination address, the AP 20 will send an acknowledgement 312.

When the first node 10 and the second node 11 first associated with the AP 20, they sent an association request frame which enables the AP 20 to allocate resources for that node, to synchronise with that node's NIC, and to establish an association identifier (ID) for the NIC. A node will then send a disassociation frame to its AP if it wishes to terminate the association. For example, a NIC that is shut down gracefully (e.g. a controlled power down rather than a sudden loss of power such as from a dislodged battery) can send a disassociation frame to alert the AP 20 that the NIC is powering off. The access point can then relinquish memory allocations and remove the NIC from the association table. These teachings re-use the disassociation frame in two ways: it is redefined to distinguish disassociation from disconnection, and it is used by the neighbour nodes to know when they should defer and reconsider their impending disassociation or disconnection which is due to poor channel conditions for their real-time data applications. Additionally, in a conventional WLAN, the disassociation frame is only used to inform the AP that the node will be disassociating when the disassociation is due to the node gracefully depowering its NIC, whereas in these teachings that frame is used regardless of whether the NIC is being depowered since this frame can still be used in the conventional manner and also when the node is dropping its channel/data link and/or its association due to poor channel quality.

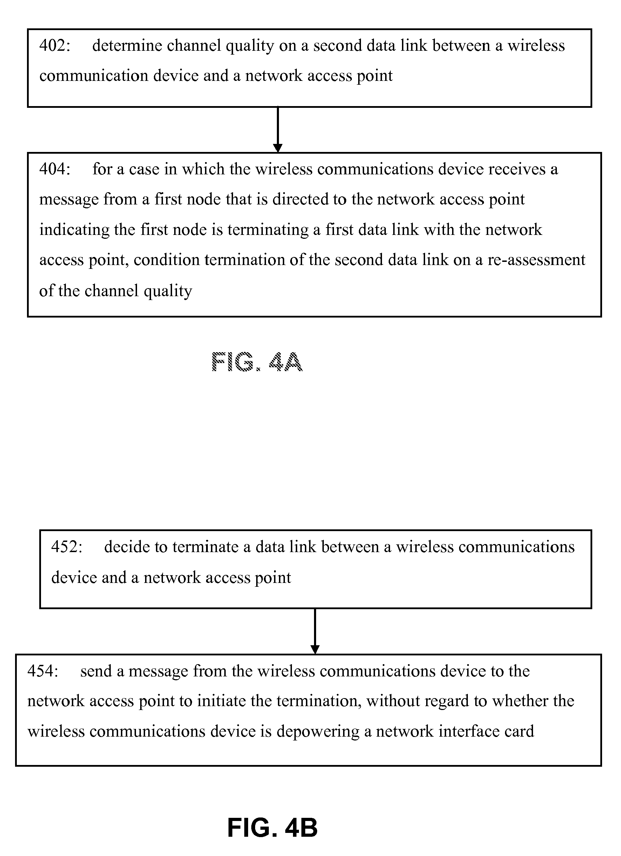

The logic flow diagram of Figure 4A illustrates some highlights of these teachings which were detailed in the above non-limiting examples from the perspective of the second node 11. Figure 4A may be considered to represent actions taken by the second node 11 according to these teachings, or how the second node 11 is operated.

Specifically, at block 402 the second node, which may be referred to as a wireless communications device, determines channel quality on a second data link between itself and a network access point (for example, the device has determined that its channel quality on the second data link has deteriorated). Block 404 then has two conditional statements. First, this applies for a case in which the second node/wireless communications device receives a message from a first node that is directed to the network access point indicating the first node is terminating a first data link with the network access point. If the second node 11 listens and finds no such message then Figure 4A no longer applies. If the second node does receive such a message then the second conditional is that the second node 11 conditions its termination of the second data link on a re-assessment of the channel quality, and that re-assessment occurs after the first data link is terminated.

Though not explicitly set forth at Figure 4A, in the examples above the first data link and the second data link are in licence-exempt radio spectrum and the network access point uses a contention-based channel access protocol. More specifically the network access point in the above examples was an access point 20 of an IEEE 802-type wireless local area network.

Also in the more specific examples above, at least the second data link is used for real-time communications. In this case the re-assessment of the channel quality comprises the second node/wireless communications device comparing at least one of a) the delay it measures on the second data link against a maximum threshold, and/or b) the throughput it measures on the second data link against a minimum threshold.

In response to the determining at block 402 of Figure 4A, the second node/ wireless communications device can defer its termination by the second data link in order to listen whether there is a message sent by some other node to the network access point indicating that other node is terminating its data link with the network access point. That is, the fact that block 404 states a first node does not imply that the second node is listening only for disassociation messages from that node, but is listening for any disassociation messages that might be sent by any node associated with that same AP 20.

In one non-limiting embodiment there are two different types of disassociation frames (where the message stated at block 404 is a disassociation frame). The second node/wireless communication device can determine that the first node is disconnecting the first data link but not disassociating from the network access point by reading a broadcast or multicast address in a destination address field of the received disassociation frame.

In a similar vein, if after the re-assessment of the channel quality at block 404 the second node/wireless communication device still decides to terminate its second data link with the network access point, by way of example it can do so by choosing from among the following:
- disassociating from the network access point by sending a disassociation frame comprising a source field containing an address of the wireless communications device and a destination field containing a point destination address; and
- disconnecting the second data link without disassociating from the network access point by sending a disassociation frame comprising a blank source field and a destination field containing a broadcast or multicast address.

Furthermore, if the second node/wireless communication device still had further data to send or receive when it disassociated from the network access point, it can then establish a new association with a new network access point such as the AP 21 shown at Figure 1 to continue its real-time communications which were ongoing on the second data link.

The logic flow diagram of Figure 4B illustrates some highlights of these teachings which were detailed in the above non-limiting examples from the perspective of the first node 10, but where the second node sends its own disassociation frame after its channel quality re-assessment then Figure 4B also describes actions by that second node. Figure 4B may be considered to represent actions taken by the first or second node according to these teachings, or how the first or second node is operated.

In the Figure 4B embodiment, first at block 452 the wireless communications device decides to terminate a data link between itself and a network access point. Then at block 454 the wireless communications device sends a message to the network access point to initiate the termination without regard to whether the wireless communications device is depowering a network interface card (NIC).

In the non-limiting examples above, the deciding at block 452 is based on either or both of a) delay on the data link approaching or exceeding a maximum threshold, and/or b) throughput on the second data link approaching or falling below a minimum threshold.

Also, in the non-limiting embodiments above where the message comprises a disassociation frame comprising a source field containing an address of the wireless communications device and a destination field containing a point destination address, this message terminates the data link by disassociating the wireless communication device from the network access point. Where the message comprises a disassociation frame comprising a blank source field and a destination field containing a broadcast or multicast address, this message terminates the data link by disconnecting the data link without disassociating the wireless communication device from the network access point.

Exemplary embodiments of these teachings provide the following technical effect of enabling neighbour nodes to know in advance when congestion in a network is likely to improve. At least for the WLAN radio environment, when one station with real-time traffic is experiencing quality issues it is likely that other stations in the same WLAN will also be experiencing similar problems, and so by enabling the neighbour nodes to know that channel conditions are likely to improve immediately following a pending disconnect or disassociation, it enables those other neighbour nodes to defer their own disconnect/disassociate action until they can test the channel again. In this manner, these teachings provide the technical effect of preventing parallel and possibly unnecessary drop-offs and/or off-loads to other networks.

The various logic flow diagrams above at Figures 4A and 4B may each be considered to illustrate examples of the operation of a method for operating a wireless communications device, and a result of execution of a computer program stored in a computer readable memory, and a specific manner in which components of an electronic device are configured to cause that electronic device to operate, whether such an electronic device is one of the STAs, some other portable radio device, or one or more components therefore such as a modem, chipset, or the like.

Such blocks and the functions they represent are non-limiting examples, and may be practised in various components such as integrated circuit chips and modules, and the exemplary embodiments of this invention may be realised in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Such circuit/circuitry embodiments include any of the following: (a) hardware-only circuit implementations (such as implementations in only analogue and/or digital circuitry) and (b) combinations of circuits and software (and/or firmware), such as: (i) a combination of processor(s) or (ii) portions of processor(s)/software (including digital signal processor(s)), software, and memory(ies) that work together to cause an apparatus, such as a STA/mobile terminal/UE, to perform the various functions summarised at Figure 4A and/or Figure 4B and (c) circuits, such as a microprocessor(s) or a portion of a microprocessor(s), that require software or firmware for operation, even if the software or firmware is not physically present. This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" also covers, for example, a baseband integrated circuit or application specific integrated circuit for a mobile phone/user equipment or a similar integrated circuit in some other portable radio device, or in the network access point.

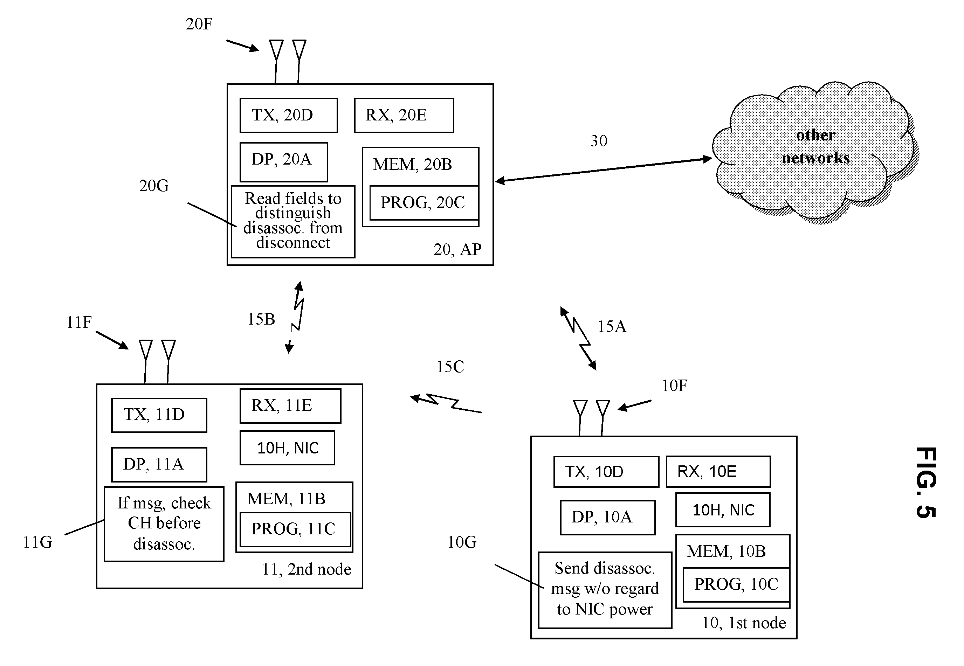

Reference is now made to Figure 5 for illustrating a simplified block diagram of various electronic devices and apparatus that are suitable for use in practising some example embodiments of this invention. In Figure 5, a wireless network represented by the AP 20, or more generally an access point if these teachings are implemented in other than a WLAN environment, is adapted for wireless communication over a first data link 15A with an apparatus such as a first station/first node 10 or more generally a wireless electronic radio device such as for example a mobile terminal/user equipment UE. The AP 20 also has a wireless second data link 15B with the second station/second node 11. The network may also provide connectivity via data/control path 30 with a broader network (e.g. a cellular network and/or a publicly switched telephone network PSTN and/or a data communications network/Internet).

The first station/first node 10 includes processing means such as at least one data processor (DP) 10A, storing means such as at least one computer-readable memory or memory unit (MEM) 10B storing at least one computer program (PROG) 10C, and communication means such as a transmitter TX 10D and a receiver RX 10E for bidirectional wireless communications with the network access point 20 via one or more antennas 10F. Also stored in the MEM 10B at reference number 10G is the first station's/first node's algorithm for sending a disassociation frame without regard to depowering its NIC 10H.

The second station/second node 11 includes processing means such as at least one data processor (DP) 11A, storing means such as at least one computer-readable memory or memory unit (MEM) 11B storing at least one computer program (PROG) 11C, and communication means such as a transmitter TX 11D and a receiver RX 11E for bidirectional wireless communications with the network access point 20 via one or more antennas 11F. The processing means 11A and the communication/receiving means 11E together also operate as measuring means to measure the channel/second data link 15B. The second node 11 additionally has a NIC 11H, and stored in the MEM 11B at reference number 11G is the second station's/second node's algorithm for checking to see if there is a disassociation message from another node and, if there is, for re-checking quality on the second data link (measuring delay and/or throughput) before deciding to disassociate or disconnect.

In more practical embodiments, each of the first and second nodes 10, 11 each have all the capabilities listed above for both, including both computer programs/algorithms 10G, 11G, and they both have measuring and comparing means for measuring delay and throughput on their respective data link 15A, 15B and comparing the measured results to various maximum and minimum thresholds to assure minimum quality for their real-time communications. They are shown separately in Figure 5 only for clarity given the different roles for and actions taken by the first and second nodes in the above non-limiting embodiments.

The access point 20 also includes processing means such as at least one data processor (DP) 20A, storing means such as at least one computer-readable memory or memory unit (MEM) 20B storing at least one computer program (PROG) 20C, and communication means such as a transmitter TX 20D and a receiver RX 20E for bidirectional wireless communications with the first station/first node 10 and the second station/second node 11 (and other stations) via one or more antennas 20F. The AP 20 also has a program stored in its local memory for reading the source and destination fields of the disassociation messages that a given station might send to it and from at least those fields distinguishing a disassociation request from a disconnect request, as shown at 20G.

While not particularly illustrated for the stations/nodes 10, 11 or AP 20, those devices are also assumed to include as part of their wireless communicating means a modem which may be inbuilt on an RF front end chip within those devices 10, 11, 20 and which also carries the TX 10D/11D/20D and the RX 10E/11E/20E.

At least one of the PROGs 10C/10G/11C/11G/20C/20G in the stations/nodes 10/11 and/or in the AP 20 is assumed to include program instructions that, when executed by the associated DP 10A/11A/20A, enable the device to operate in accordance with the exemplary embodiments of this invention, as detailed above particularly with respect to Figures 4A-B. In this regard the exemplary embodiments of this invention may be implemented at least in part by computer software stored on the MEM 10B, 11B, 20B which is executable by the DP 10A/11A of the respective station 10/11 and/or by the DP 20A of the access point 20, or by hardware, or by a combination of tangibly stored software and hardware (and tangibly stored firmware). Electronic devices implementing these aspects of the invention may not be the entire stations 10/11 or AP 20, but exemplary embodiments may be implemented by one or more components of same such as the above described tangibly stored software, hardware, firmware and DP, modem, system on a chip SOC or an application specific integrated circuit ASIC.

In general, the various embodiments of the station 10, 11 can include, but are not limited to personal portable digital devices having wireless communication capabilities, including but not limited to user equipment, cellular telephones, mobile terminals, smart phones, navigation devices, laptop/palmtop/tablet computers, digital cameras and Internet appliances, as well as machine-to-machine devices which operate without direct user action (for example a robot or any electronic device which may become a part of the Internet of Things IoT). Any of these implementations of a wireless communication device (the first and second nodes in Figures 2 and 3) can include a contention-based interface to the relevant network (WLAN, Zigbee, cellular RACH, etc.). As noted above with respect to Figures 4A and 4B, these teachings may be practised by one or more components of such a wireless communication device, such as for example a chipset, an integrated circuit, a digital processor running stored software, a modem, a USB dongle, and other such components.

In general, the various embodiments of the AP 20 can include, but are not limited to, WLAN APs, Zigbee routers/coordinators, base stations including macro/micro/pico/home NodeBs and eNodeBs, and any other network entity/network access point which controls access to the wireless medium using a contention-based protocol.

Various embodiments of the computer readable MEMs 10B, 11B, 20B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DPs 10A, 11A, 20A include but are not limited to general purpose computers, special purpose computers, microprocessors, digital signal processors (DSPs), and multi-core processors.

Some of the various features of the above non-limiting embodiments may be used to advantage without the corresponding use of other described features. The foregoing description should therefore be considered as merely illustrative of the principles, teachings and exemplary embodiments of this invention, and not in limitation thereof.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for operating a wireless communications device (11), the method comprising:
determining (402) channel quality on a second data link (15B) between the wireless communications device (11) and a network access point (20); **characterised by**:
for a case in which the wireless communications device (11) receives a message from a first node (10) to the network access point (20) indicating the first node (10) is terminating a first data link (15A) with the network access point (20), conditioning (404) termination by the wireless communications device (10) of the second data link (15B) on a re-assessment of the channel quality after the first data link (15A) is terminated.

2. A method according to claim 1, wherein the first data link (15A) and the second data link (15B) are in licence-exempt radio spectrum and the network access point uses a contention-based channel access protocol.

3. A method according to claim 1 or claim 2, wherein at least the second data link (15B) is used for real-time communications; and
the re-assessment of the channel quality comprises the wireless communications device (11) comparing at least one of: measured delay on the second data link (15B) against a maximum threshold, and measured throughput on the second data link (15B) against a minimum threshold.

4. A method according to any of claims 1 to 3, the method comprising:
in response to the determining, deferring termination by the wireless communications device (11) of the second data link (15B) to listen whether there is a message sent by another node to the network access point (20) indicating the another node is terminating its data link with the network access point (20).

5. A method according to any of claims 1 to 4, the method comprising:
after the re-assessment of the channel quality, the wireless communications device (11) terminating the second data link by choosing from among:
• disassociating from the network access point (20) by sending from the wireless communications device (11) a disassociation frame comprising a source field containing an address of the wireless communications device (11) and a destination field containing a point destination address; and
• disconnecting the second data link (15B) without disassociating from the network access point (20) by sending from the wireless communications device (11) a disassociation frame comprising a blank source field and a destination field containing a broadcast or multicast address.

6. Apparatus (11) for controlling a wireless communications device (11), the apparatus comprising a processing system (11DP) configured to control the wireless communications device (11) at least to:
determine (402) channel quality on a second data link (15B) between the wireless communications device (11) and a network access point (20); and
for a case in which the wireless communications device (11) receives a message from a first node (10) to the network access point (20) indicating the first node (10) is terminating a first data link (15A) with the network access point (20), condition (404) termination by the wireless communications device (11) of the second data link (15B) on a re-assessment of the channel quality after the first data link (15A) is terminated.

7. Apparatus according to claim 6, wherein the first data link (15A) and the second data link (15B) are in licence-exempt radio spectrum and the network access point (20) uses a contention-based channel access protocol.

8. Apparatus according to claim 7, wherein the network access point (20) is an access point of an IEEE 802-type wireless local area network, and the wireless communication device (11) comprises a station.

9. Apparatus according to any of claims 6 to 8, wherein at least the second data link (15B) is used for real-time communications; and
the re-assessment of the channel quality comprises the wireless communications device (11) comparing at least one of: measured delay on the second data link (15B) against a maximum threshold, and measured throughput on the second data link against a minimum threshold.

10. Apparatus according to any of claims 6 to 9, wherein the processing system (11DP) is configured to control the wireless communications device (11) to:
in response to the determining, defer termination by the wireless communications device (11) of the second data link (15B) to listen whether there is a message sent by another node (13) to the network access point (20) indicating the another node (13) is terminating its data link with the network access point (20).

11. Apparatus according to any of claims 6 to 10, wherein the received message is a disassociation frame, and the processing system (11DP) is configured to control the wireless communications device (11) to:
determine that the first node (10) is disconnecting the first data link (15A) but not disassociating from the network access point (20) by reading a broadcast or multicast address in a destination address field of the received disassociation frame.

12. Apparatus according to any of claims 6 to 11, wherein the processing system (11DP) is configured to control the wireless communications device (11) to:
after the re-assessment of the channel quality, terminate the second data link (15B) by choosing from among:
• disassociating from the network access point (20) by sending from the wireless communications device (11) a disassociation frame comprising a source field containing an address of the wireless communications device (11) and a destination field containing a point destination address; and
• disconnecting the second data link (15B) without disassociating from the network access point (20) by sending from the wireless communications device (11) a disassociation frame comprising a blank source field and a destination field containing a broadcast or multicast address.

13. Apparatus according to claim 12, wherein the processing system (11DP) is configured to control the wireless communications device (11) to:
for the case that the wireless communications device (11) disassociates from the network access point (20), establish a new association with a new network access point (21) to continue real-time communications which were ongoing on the second data link (15B).

14. Apparatus according to any of claims 6 to 13, wherein the wireless communication device (11) is a user equipment (11) and the apparatus for controlling a wireless communications device comprises the processing system (11DP) which is within the user equipment (11).

15. A computer program comprising a set of instructions for operating a wireless communications device (11), the set of instructions comprising:
code for determining (402) channel quality on a second data link (15B) between the wireless communications device (11) and a network access point (20); **characterised by**
code for conditioning termination (404) by the wireless communications device (11) of the second data link (15B) on a re-assessment of the channel quality after the first data link (15B) is terminated for a case in which the wireless communications device (11) receives a message from a first node (10) to the network access point (20) indicating the first node (10) is terminating a first data link (15B) with the network access point (20).

## Patentansprüche

1. Verfahren zum Betreiben eines drahtlosen Kommunikationsgeräts (11), wobei das Verfahren umfasst:
- Bestimmen (402) der Kanalqualität einer zweiten Datenverbindung (15B) zwischen dem drahtlosen Kommunikationsgerät (11) und einem Netzwerkzugriffspunkt (20), **gekennzeichnet durch**:
- in einem Fall, in dem das drahtlose Kommunikationsgerät (11) eine Nachricht von einem ersten Knoten (10) an den Netzwerkzugriffspunkt (20) empfängt, die angibt, dass der erste Knoten (10) eine erste Datenverbindung (15A) mit dem Netzwerkzugriffspunkt (20) beendet, Konditionieren (404) der Beendigung der zweiten Datenverbindung (15B) **durch** das drahtlose Kommunikationsgerät (10) basierend auf einer Neubewertung der Kanalqualität nach dem Beenden der ersten Datenverbindung (15A).

2. Verfahren nach Anspruch 1, wobei sich die erste Datenverbindung (15A) und die zweite Datenverbindung (15B) im lizenzfreien Funkspektrum befinden und der Netzwerkzugriffspunkt ein konkurrenzbasiertes Kanalzugriffsprotokoll verwendet.

3. Verfahren nach Anspruch 1 oder 2, wobei wenigstens die zweite Datenverbindung (15B) für Echtzeitkommunikationen verwendet wird und
- die Neubewertung der Kanalqualität umfasst, dass das drahtlose Kommunikationsgerät (11) eine gemessene Verzögerung der zweiten Datenverbindung (15B) mit einem maximalen Schwellenwert und/oder einen gemessenen Durchsatz der zweiten Datenverbindung (15B) mit einem minimalen Schwellenwert vergleicht.

4. Verfahren nach einem der Ansprüche 1 bis 3, wobei das Verfahren umfasst:
- in Antwort auf die Bestimmung, Aussetzen der Beendigung der zweiten Datenverbindung (15B) durch das drahtlose Kommunikationsgerät (11), um zu hören, ob eine durch einen anderen Knoten an den Netzwerkzugriffspunkt (20) gesendete Nachricht vorhanden ist, die angibt, dass der andere Knoten seine Datenverbindung mit dem Netzwerkzugriffspunkt (20) beendet.

5. Verfahren nach einem der Ansprüche 1 bis 4, wobei das Verfahren umfasst:
- nach der Neubewertung der Kanalqualität, Beenden der zweiten Datenverbindung durch das drahtlose Kommunikationsgerät (11) durch Auswählen aus:
- Disassoziieren vom Netzwerkzugriffspunkt (20) durch Senden eines Disassozüerungs-Frames, der ein eine Adresse des drahtlosen Kommunikationsgeräts (11) enthaltendes Quellfeld und ein eine Punktzieladresse enthaltendes Zielfeld umfasst, vom drahtlosen Kommunikationsgerät (11), und
- Trennen der zweiten Datenverbindung (15B) ohne Disassoziierung vom Netzwerkzugriffspunkt (20) durch Senden eines Disassoziierungs-Frames, der ein leeres Quellfeld und ein eine Broadcast- oder Multicast-Adresse enthaltendes Zielfeld umfasst, vom drahtlosen Kommunikationsgerät (11).

6. Vorrichtung (11) zum Steuern eines drahtlosen Kommunikationsgeräts (11), wobei die Vorrichtung ein Verarbeitungssystem (11 DP) umfasst, das dafür ausgelegt ist, das drahtlose Kommunikationsgerät (11) zu steuern, um zumindest:
- die Kanalqualität einer zweiten Datenverbindung (15B) zwischen dem drahtlosen Kommunikationsgerät (11) und einem Netzwerkzugriffspunkt (20) zu bestimmen (402), und
- in einem Fall, in dem das drahtlose Kommunikationsgerät (11) eine Nachricht von einem ersten Knoten (10) an den Netzwerkzugriffspunkt (20) empfängt, die angibt, dass der erste Knoten (10) eine erste Datenverbindung (15A) mit dem Netzwerkzugriffspunkt (20) beendet, die Beendigung der zweiten Datenverbindung (15B) durch das drahtlose Kommunikationsgerät (11) basierend auf einer Neubewertung der Kanalqualität nach dem Beenden der ersten Datenverbindung (15A) zu konditionieren (404).

7. Vorrichtung nach Anspruch 6, wobei sich die erste Datenverbindung (15A) und die zweite Datenverbindung (15B) im lizenzfreien Funkspektrum befinden und der Netzwerkzugriffspunkt (20) ein konkurrenzbasiertes Kanalzugriffsprotokoll verwendet.

8. Vorrichtung nach Anspruch 7, wobei der Netzwerkzugriffspunkt (20) ein Zugriffspunkt eines drahtlosen lokalen Netzes des IEEE-802-Typs ist und das drahtlose Kommunikationsgerät (11) eine Station umfasst.

9. Vorrichtung nach einem der Ansprüche 6 bis 8, wobei wenigstens die zweite Datenverbindung (15B) für Echtzeitkommunikationen verwendet wird und
- die Neubewertung der Kanalqualität umfasst, dass das drahtlose Kommunikationsgerät (11) eine gemessene Verzögerung der zweiten Datenverbindung (15B) mit einem maximalen Schwellenwert und/oder einen gemessenen Durchsatz der zweiten Datenverbindung mit einem minimalen Schwellenwert vergleicht.

10. Vorrichtung nach einem der Ansprüche 6 bis 9, wobei das Verarbeitungssystem (11 DP) dafür ausgelegt ist, das drahtlose Kommunikationsgerät (11) zu steuern, um:
- in Antwort auf die Bestimmung, die Beendigung der zweiten Datenverbindung (15B) durch das drahtlose Kommunikationsgerät (11) auszusetzen, um zu hören, ob eine durch einen anderen Knoten (13) an den Netzwerkzugriffspunkt (20) gesendete Nachricht vorhanden ist, die angibt, dass der andere Knoten (13) seine Datenverbindung mit dem Netzwerkzugriffspunkt (20) beendet.

11. Vorrichtung nach einem der Ansprüche 6 bis 10, wobei die empfangene Nachricht ein Disassoziierungs-Frame ist und das Verarbeitungssystem (11 DP) dafür ausgelegt ist, das drahtlose Kommunikationsgerät (11) zu steuern, um:
- zu bestimmen, dass der erste Knoten (10) die erste Datenverbindung (15A) durch Lesen einer Broadcast- oder Multicast-Adresse in einem Zieladressenfeld des empfangenen Disassoziierungs-Frames trennt, aber nicht vom Netzwerkzugriffspunkt (20) disassoziiert.

12. Vorrichtung nach einem der Ansprüche 6 bis 11, wobei das Verarbeitungssystem (11 DP) dafür ausgelegt ist, das drahtlose Kommunikationsgerät (11) zu steuern, um:
- nach der Neubewegung der Kanalqualität die zweite Datenverbindung (15B) zu beenden durch Auswählen aus:
- Disassoziieren vom Netzwerkzugriffspunkt (20) durch Senden eines Disassoziierungs-Frames, der ein eine Adresse des drahtlosen Kommunikationsgeräts (11) enthaltendes Quellfeld und ein eine Punktzieladresse enthaltendes Zielfeld umfasst, vom drahtlosen Kommunikationsgerät (11), und
- Trennen der zweiten Datenverbindung (15B) ohne Disassoziierung vom Netzwerkzugriffspunkt (20) durch Senden eines Disassoziierungs-Frames, der ein leeres Quellfeld und ein eine Broadcast- oder Multicast-Adresse enthaltendes Zielfeld umfasst, vom drahtlosen Kommunikationsgerät (11).

13. Vorrichtung nach Anspruch 12, wobei das Verarbeitungssystem (11 DP) dafür ausgelegt ist, das drahtlose Kommunikationsgerät (11) zu steuern, um:
- in dem Fall, dass sich das drahtlose Kommunikationsgerät (11) vom Netzwerkzugriffspunkt (20) disassozüert, eine Neuassoziierung mit einem neuen Netzwerkzugriffspunkt (21) herzustellen, um Echtzeitkommunikationen fortzusetzen, die auf der zweiten Datenverbindung (15B) stattgefunden haben.

14. Vorrichtung nach einem der Ansprüche 6 bis 13, wobei das drahtlose Kommunikationsgerät (11) ein Benutzergerät (11) ist und die Vorrichtung zum Steuern eines drahtlosen Kommunikationsgeräts das Verarbeitungssystem (11 DP) umfasst, das sich im Benutzergerät (11) befindet.

15. Computerprogrammprodukt, das einen Befehlssatz zum Betreiben eines drahtlosen Kommunikationsgeräts (11) umfasst, wobei der Befehlssatz umfasst:
- einen Code zum Bestimmen (402) der Kanalqualität einer zweiten Datenverbindung (15B) zwischen dem drahtlosen Kommunikationsgerät (11) und einem Netzwerkzugriffspunkt (20), **gekennzeichnet durch**:
- einen Code zum Konditionieren (404) der Beendigung der zweiten Datenverbindung (15B) **durch** das drahtlose Kommunikationsgerät (11) basierend auf einer Neubewertung der Kanalqualität nach dem Beenden der ersten Datenverbindung (15B) in einem Fall, in dem das drahtlose Kommunikationsgerät (11) eine Nachricht von einem ersten Knoten (10) an den Netzwerkzugriffspunkt (20) empfängt, die angibt, dass der erste Knoten (10) eine erste Datenverbindung (15B) mit dem Netzwerkzugriffspunkt (20) beendet.

## Revendications

1. Procédé de fonctionnement d'un dispositif de communication sans fil (11), le procédé comprenant :
la détermination (402) d'une qualité de canal sur une seconde liaison de données (15B) entre le dispositif de communication sans fil (11) et un point d'accès au réseau (20) ; **caractérisé par** :
au cas où le dispositif de communication sans fil (11) reçoit un message provenant d'un premier noeud (10) vers le point d'accès au réseau (20) indiquant que le premier noeud (10) met fin à une première liaison de données (15A) avec le point d'accès au réseau (20), conditionner (404) la terminaison par le dispositif de communication sans fil (11) de la seconde liaison de données (15B) sur une réévaluation de la qualité de canal après la fin de la première liaison de données (15A).

2. Procédé selon la revendication 1, dans lequel la première liaison de données (15A) et la seconde liaison de données (15B) se trouvent dans le spectre radio non soumis à licence et le point d'accès au réseau utilise un protocole d'accès de canal à base de contention.

3. Procédé selon la revendication 1 ou la revendication 2, dans lequel au moins la seconde liaison de données (15B) est utilisée pour des communications en temps réel ; et
la réévaluation de la qualité de canal comprend le dispositif de communication sans fil (11) qui compare au moins un élément parmi : un délai mesuré sur la seconde liaison de données (15B) par rapport à un seuil maximum, et un débit mesuré sur la seconde liaison de données (15B) par rapport à un seuil minimum.

4. Procédé selon l'une quelconque des revendications 1 à 3, le procédé comprenant :
en réponse à la détermination, différer une terminaison par le dispositif de communication sans fil (11) de la seconde liaison de données (15B) pour écouter s'il existe un message envoyé par un autre noeud au point d'accès au réseau (20) indiquant que l'autre noeud met fin à sa liaison de données avec le point d'accès au réseau (20).

5. Procédé selon l'une quelconque des revendications 1 à 4, le procédé comprenant :
après la réévaluation de la qualité de canal, le dispositif de communication sans fil (11) met fin à la seconde liaison de données en choisissant parmi :
• la dissociation du point d'accès au réseau (20) par l'envoi depuis le dispositif de communication sans fil (11) d'une trame de dissociation comprenant un champ source contenant une adresse du dispositif de communication sans fil (11) et un champ de destination contenant une adresse de destination d'un point; et
• la déconnexion de la seconde liaison de données (15B) sans dissociation du point d'accès au réseau (20) par l'envoi depuis le dispositif de communication sans fil (11) d'une trame de dissociation comprenant un champ source vierge et un champ de destination contenant une adresse de diffusion ou de multidiffusion.

6. Appareil (11) permettant de commander un dispositif de communication sans fil (11), l'appareil comprenant un système de traitement (11 DP) configuré pour commander au dispositif de communication sans fil (11) au moins de :
déterminer (402) une qualité de canal sur une seconde liaison de données (15B) entre le dispositif de communication sans fil (11) et un point d'accès au réseau (20) ; et
au cas où le dispositif de communication sans fil (11) reçoit un message provenant d'un premier noeud (10) vers le point d'accès au réseau (20) indiquant que le premier noeud (10) met fin à une première liaison de données (15A) avec le point d'accès au réseau (20), conditionner (404) la terminaison par le dispositif de communication sans fil (11) de la seconde liaison de données (15B) sur une réévaluation de la qualité de canal après la fin de la première liaison de données (15A).

7. Appareil selon la revendication 6, dans lequel la première liaison de données (15A) et la seconde liaison de données (15B) se trouvent dans le spectre radio non soumis à licence et le point d'accès au réseau (20) utilise un protocole d'accès de canal à base de contention.

8. Appareil selon la revendication 7, dans lequel le point d'accès au réseau (20) est un point d'accès d'un réseau local sans fil IEEE de type 802, et le dispositif de communication sans fil (11) comprend une station.

9. Appareil selon l'une quelconque des revendications 6 à 8, dans lequel au moins la seconde liaison de données (15B) est utilisée pour des communications en temps réel ; et
la réévaluation de la qualité de canal comprend le dispositif de communication sans fil (11) qui compare au moins un élément parmi : un délai mesuré sur la seconde liaison de données (15B) par rapport à un seuil maximum, et un débit mesuré sur la seconde liaison de données par rapport à un seuil minimum.

10. Appareil selon l'une quelconque des revendications 6 à 9, dans lequel le système de traitement (11 DP) est configuré pour commander au dispositif de communication sans fil (11) de :
en réponse à la détermination, différer la terminaison par le dispositif de communication sans fil (11) de la seconde liaison de données (15B) pour écouter s'il y a un message envoyé par un autre noeud (13) au point d'accès au réseau (20) indiquant que l'autre noeud (13) met fin à sa liaison de données avec le point d'accès au réseau (20).

11. Appareil selon l'une quelconque des revendications 6 à 10, dans lequel le message reçu est une trame de dissociation, et le système de traitement (11 DP) est configuré pour commander au dispositif de communication sans fil (11) de :
déterminer que le premier noeud (10) se déconnecte de la première liaison de données (15A) mais ne se dissocie pas du point d'accès au réseau (20) par la lecture d'une adresse de diffusion ou de multidiffusion dans un champ d'adresse de destination de la trame de dissociation reçue.

12. Appareil selon l'une quelconque des revendications 6 à 11, dans lequel le système de traitement (11 DP) est configuré pour commander au dispositif de communication sans fil (11) de :
après la réévaluation de la qualité de canal, mettre fin à la seconde liaison de données (15B) en choisissant parmi :
• la dissociation du point d'accès au réseau (20) par l'envoi depuis le dispositif de communication sans fil (11) d'une trame de dissociation comprenant un champ source contenant une adresse du dispositif de communication sans fil (11) et un champ de destination contenant une adresse de destination de point ; et
• la déconnexion de la seconde liaison de données (15B) sans dissociation du point d'accès au réseau (20) par l'envoi à partir du dispositif de communication sans fil (11) d'une trame de dissociation comprenant un champ source vierge et un champ de destination contenant une adresse de diffusion ou de multidiffusion.

13. Appareil selon la revendication 12, dans lequel le système de traitement (11 DP) est configuré pour commander au dispositif de communication sans fil (11) de :
au cas où le dispositif de communication sans fil (11) se dissocie du point d'accès au réseau (20), établir une nouvelle association avec un nouveau point d'accès au réseau (21) pour continuer des communications en temps réel qui avaient lieu sur la seconde liaison de données (15B).

14. Appareil selon l'une quelconque des revendications 6 à 13, dans lequel le dispositif de communication sans fil (11) est un équipement utilisateur (11) et l'appareil permettant de commander un dispositif de communication sans fil comprend le système de traitement (11 DP) qui se trouve à l'intérieur de l'équipement utilisateur (11).

15. Programme informatique comprenant un ensemble d'instructions permettant de faire fonctionner un dispositif de communication sans fil (11), l'ensemble d'instructions comprenant :
un code permettant de déterminer (402) une qualité de canal sur une seconde liaison de données (15B) entre le dispositif de communication sans fil (11) et un point d'accès au réseau (20) ; **caractérisé par**
un code permettant de conditionner une terminaison (404) par le dispositif de communication sans fil (11) de la seconde liaison de données (15B) sur une réévaluation de la qualité de canal après la fin de la première liaison de données (15B) concernant un cas dans lequel le dispositif de communication sans fil (11) reçoit un message provenant d'un premier noeud (10) vers le point d'accès au réseau (20) indiquant que le premier noeud (10) met fin à une première liaison de données (15B) avec le point d'accès au réseau (20).
